# EUROPEAN PATENT SPECIFICATION

(11) **EP 4 486 653 B1**
(45) Date of publication and mention of the grant of the patent: **03.06.2026**
(21) Application number: 23730614.7
(22) Date of filing: 28.02.2023
(51) Int. Cl.: B64F 5/40, B64U 80/20, B64U 80/10, B64U 80/25, B64U 70/97

(54) **AN UNMANNED AERIAL VEHICLE MAINTENANCE STATION**
EINE WARTUNGSSTATION FÜR UNBEMANNTE LUFTFAHRZEUGE
UNE STATION DE MAINTENANCE DE DRONE

(30) Priority: 07.03.2022 TR 202203395; 10.06.2022 TR 202209638
(43) Date of publication of application: 08.01.2025
(73) Proprietor: Droneqube, inc., Delaware, County of Kent, 19901 (US)
(72) Inventor: MERDIN, Murat, Urla/ Izmir (TR); MERDIN, Oguz Deniz, Urla/ Izmir (TR)
(74) Representative: Yalçiner Patent and Consulting Ltd.
(86) International application number: PCT/TR2023/050196
(87) International publication number: WO 2023/172224

(56) References cited:
- WO-A1-2021/092786
- CN-A- 109 018 413
- CN-A- 113 619 803
- KR-A- 20170 138 663
- US-A1- 2021 197 983
- US-B1- 9 815 633

## Description

### Technical Field

The invention relates to a maintenance station for unmanned aerial vehicles having a closed housing.

### State of the Art

One of the biggest problems with drones and similar unmanned aerial vehicles is charging times. These vehicles, which have limited charging times, often need to be recharged or new batteries must be added. In addition, unmanned aerial vehicles used for agricultural spraying also need to be filled with pesticides.

Independent maintenance stations have been developed to meet these charging requirements. These maintenance stations include a housing where the unmanned aerial vehicle can land. Charging stations can be located inside said housing. However, since charging times are long, the drone cannot operate during charging and the total equipment efficiency decreases. Considering that charging times are longer than flight times, the drone is charged longer than it flies or waits at maintenance stations with robotic arms that change batteries.

TR2011/11022 describes a platform for landing unmanned aerial vehicles and a system for changing the vehicle's battery. The system comprises battery chambers and a robotic arm for charging and changing batteries. Cameras are also used here for positioning.

US 10112712B1 describes a platform for landing unmanned aerial vehicles and a station for charging the vehicle's battery, changing fuel cells, refueling, and using cameras for positioning.

TR2019/13702 relates to a platform for landing unmanned aerial vehicles and a station for changing the vehicle's battery. The system comprises multiple battery chambers, batteries, and an arm that rotates around its axis and moves up and down to change the battery. The robotic arm changes the battery.

US9815633B1 discloses a method and system for evaluating and loading unmanned aerial vehicles. In this system The UAVs are moved by a conveyance device and carried out a structural integrity test or a functionality test for mentioned UAVs.

KR20170138663A discloses a drone station designed for the management and charging of UAVs. The station is installed on the ground within the drone's flight zone. Once the drone lands on the station, maintenance tasks such as battery replacement are carried out, after which the drone can take off again. The drone station includes: an enclosure with an interior space; a drone tray located at the lower end inside the enclosure to facilitate drone transfer; and a battery storage unit inside the enclosure for battery exchange and drone charging.

WO2021092786A1 discloses a landing platform for UAVs. The platform's main body features distinct zones for landing and take-off, with a landing zone designated for parking the drone and a separate take-off zone. A transfer component is integrated into the platform's main body to move the drone from the landing zone to the take-off zone. Additionally, the platform includes a battery disassembly and assembly system, which is used to remove old batteries and install new ones on the drone when it is positioned in the take-off area.

CN109018413A discloses a drone station comprises a housing with slidable platform which provides landing zone for UAVs and moves the UAVs into the housing.

US2021197983A1 discloses a base station for UAVs. The base station comprises an operating platform and a landing platform, which are independent but positioned adjacent to each other. A transfer mechanism, at least partially located on the landing platform, is designed to move the UAV from the landing platform to the operating platform and/or transfer the UAV stored in the operating platform back to the landing platform.

CN113619803A discloses a a platform having a hangar where the UAV is housed, along with an oiling device and a dosing device. The UAV body, equipped with a fuel tank and a pesticide box, is positioned inside the hangar. The oiling device refuels the UAV's tank, while the dosing device fills the pesticide box with the required pesticide.

Battery changing with robotic arms is a highly sensitive process. If the robot does not move the battery to the correct position and in the correct direction, it is not possible to change the battery, and there is even a possibility of damage to the unmanned aerial vehicle. To solve this problem, the first two prior art documents used cameras to ensure the correct position. However, these systems are known to be expensive and have low accuracy and durability. In the last prior art document, the whole structure is moved to change the battery, but the correct positioning is still not achieved.

It was previously stated that agricultural unmanned aerial vehicles require spraying inputs. In known unmanned aerial vehicle spraying operations, the operator does dosing. In this process, which does not have any control and automation, mistakes can easily be made, resulting in unnecessary or inadequate consumption of agrochemicals. In addition, the occupational health and safety of the operator who has to deal with agrochemicals are at risk. With this method, it is impossible to measure how often and how much pesticide is applied to which location, nor can it be recorded. In addition, there are no models among unmanned aerial vehicles at maintenance stations that can analyze crops and spray at the same time. For this reason, the spraying locations and amounts of unmanned aerial vehicles should be planned before the mission.

As a result, all the problems mentioned above have necessitated innovation in the related field.

### Brief Description and Objects of the Invention

The main object of the present invention is to provide a structure of a maintenance station for unmanned aerial vehicles having a compact unmanned aerial vehicle adjustment mechanism, which has a lower margin of error in operations such as battery and pesticide feeding, and which can also cost less. Accordingly, a maintenance station is defined in claim 1. Preferred embodiments are defined in the dependent claims.

Thus, while moving towards a common point, the adjustment elements push the unmanned aerial vehicle that has landed on the platform, and with this pushing motion, the unmanned aerial vehicle is fixed at a predetermined point and moved into the platform and the housing. In this case, since the position of the unmanned aerial vehicle is known precisely, the precision required by the robotic arm is reduced, and maintenance operations can be easily performed.

A preferred embodiment of the invention comprises a drive element for driving the drive elements and a trigger sensor for triggering the drive elements. Accordingly, the landing of the unmanned aerial vehicle is quickly detected, and the adjustment elements are directly activated. Thus, a faster adjustment is achieved and the need for human labor is completely eliminated.

A preferred embodiment of the invention comprises at least two openings and two platforms. Thus, two unmanned aerial vehicles can land at the station at the same time, and when maintenance of one is completed, the other can be taken into the housing for maintenance.

A preferred embodiment of the invention comprises at least one secondary filling feed for pesticide filling on the housing exterior. Accordingly, only unmanned aerial vehicles requiring pesticides can be filled without entering the housing. This embodiment is also useful when the station is full.

A preferred embodiment of the invention comprises the camera for controlling a pesticide spraying area, a processing unit for determining the type of plant, the type of pesticide and the area to be sprayed based on data it received from the said camera, and communication units for communication between the processing unit and the unmanned aerial vehicle.

Thus, the station is configured to provide a detection function. By determining the correct pesticide type and quantity, both savings and human errors are avoided.

### Descriptions of the Figures Describing the Invention

In order to better explain the device developed with this invention, the figures used, and the related explanations are as follows.
**Figure 1** shows an isometric view of the maintenance system and the unmanned aerial vehicle with the centering elements turned on. The housing roof is not shown for clarity of the system.
**Figure 1a** shows an isometric view of the maintenance system and unmanned aerial vehicle with centering elements turned off.
**Figure 1b** shows an isometric view of the maintenance system with the centering elements turned on.
**Figure 1c** shows an isometric view of the maintenance system with the centering elements turned off.
**Figure 2** shows the side view of the unmanned aerial vehicle at the entrance of the maintenance system and wherein the housing is transparent.
**Figure 2a** shows the side view of the unmanned aerial vehicle in the maintenance system when it is inside the housing.
**Figure 2b** shows the side view of the unmanned aerial vehicle at the exit of the maintenance system.
**Figure 3** shows an isometric view of the maintenance system during the filling of the unmanned aerial vehicle.
**Figure 4** shows an isometric view of the robotic arm.
**Figure 5** shows another isometric view of the maintenance system.

### Definitions of the Elements/Parts/Components of the Invention

In order to better explain the device developed with this invention, the components and parts in the figures are numbered and the corresponding numbers are given below.
**1.** Maintenance station
   **10.** Housing
      **11.** Door
      **11a.** Opening
      **12.** Maintenance door
      **13.** Maintenance area
      **14.** Secondary feed
   **20.** Platform
      **21.** Adjustment element
      **211.** Shaft
      **22.** Adjustment guide
         **23.** Slide
         **24.** Guide
   **30.** Robotic arm
      **31.** Maintenance arm
         **311.** Holder
         **312.** Holder end
         **313.**Filling tube
      **32.** First arm
         **321.** First ear
      **33.** Second arm
         **331.** Second end
         **332.** Second ear
      **34.** Third arm
         **341.** Third end
         **342.** Third ear
      **35.** Fourth arm
         **351**.Fourth end
**100.** Unmanned aerial vehicle
   **110.** Aerial vehicle hull
   **120.**Filling port
**P.** Battery
**R1.** First axis
**R2.** Second axis
**R3.** Third axis
**R4.** Fourth axis
**R5.** Fifth axis
**R6.** Sixth axis

### Detailed Description of the Invention

The invention relates to a maintenance station (1) for unmanned aerial vehicles (100).

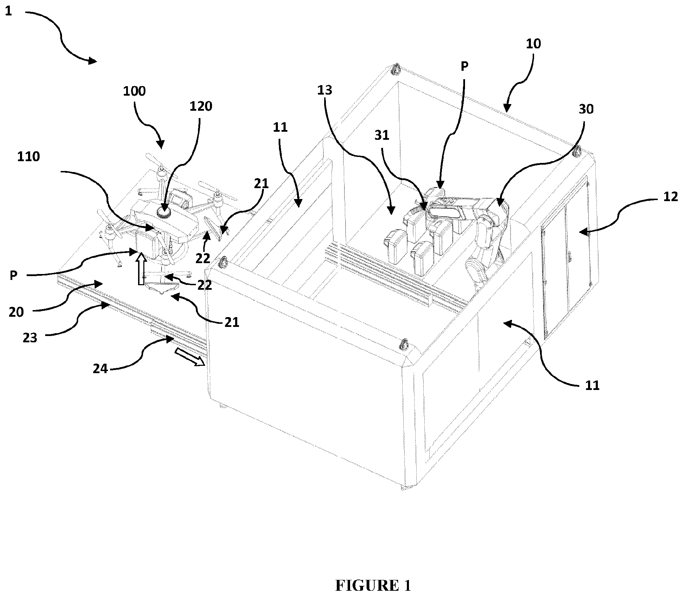

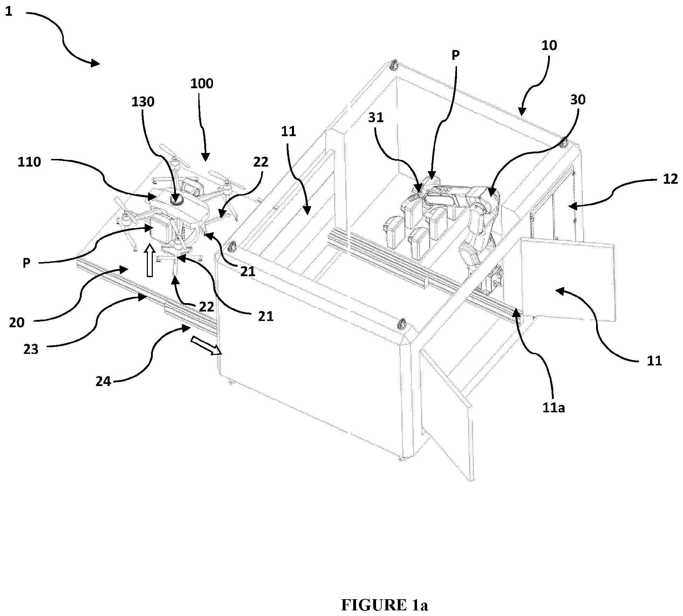

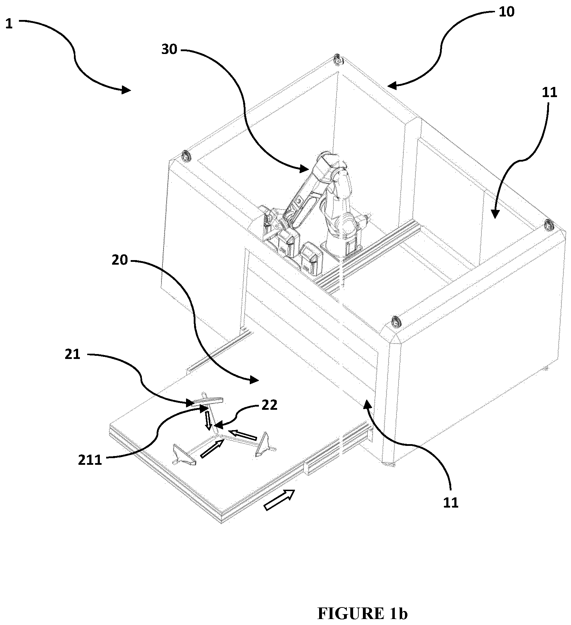

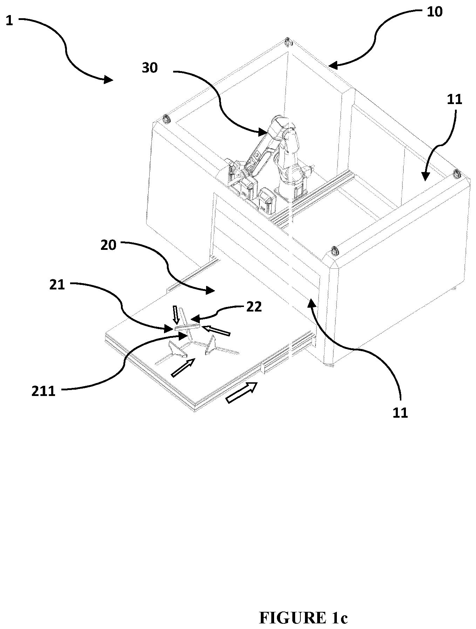

Referring to Figures 1 and 1a, the maintenance system (1) is configured for unmanned aerial vehicles (100), in particular vehicles known as drones. An unmanned aerial vehicle (UAV) (100) is a remotely or fully autonomously piloted device, preferably with at least one or preferably multiple propellers. The devices referred to herein comprise at least one battery (P), and the agricultural versions further comprise a filling port (120), preferably at the top of the aerial vehicle body (110), and a spraying system for spraying the filled pesticide.

The maintenance station (1) is configured on housing (10). Said housing (10) is preferably provided in the form of a quadrangular prism. At least one, preferably two, openings (11a) are provided in the housing (10). The openings (11a) allow the unmanned aerial vehicle to enter the housing (10). Said openings (11a) are connected by a door (11). Here, the doors (11) can be pivotally bottom-up, right-to-left opening doors (11), or can also be folding doors (11) are used herein. Preferably, said housing (10) is a completely closed geometry except for the openings (11a).

The maintenance station (1) comprises a platform (20) on which the unmanned aerial vehicle (100) can land. Preferably, the platform (20) is provided in the form of a planar plate. After landing on the unmanned aerial vehicle (100), the platform (20) moves into the housing (10).

Accordingly, the platform (20) comprises at least one, preferably two slides (23) positioned on at least one, preferably two, in particular opposite sides thereof. The housing (10) also comprises guides (24) extending out of the housing (10) corresponding to said slides (23), and the slides (23) are engaged with the guides (24).

With this arrangement, the platform (20) slides in and out of the housing (10) on the guides (24) of the slide (23). Workforce can be used to provide this movement, as well as drive elements such as pistons or motors.

Furthermore, the maintenance station (1) may comprise a second platform. When an unmanned aerial vehicle (100) is inside the housing (10), a second unmanned aerial vehicle (100) may land on this second platform (20). Said second platform (20) can also be connected to the housing (10) by means of a slide (23) guide (24) cooperation.

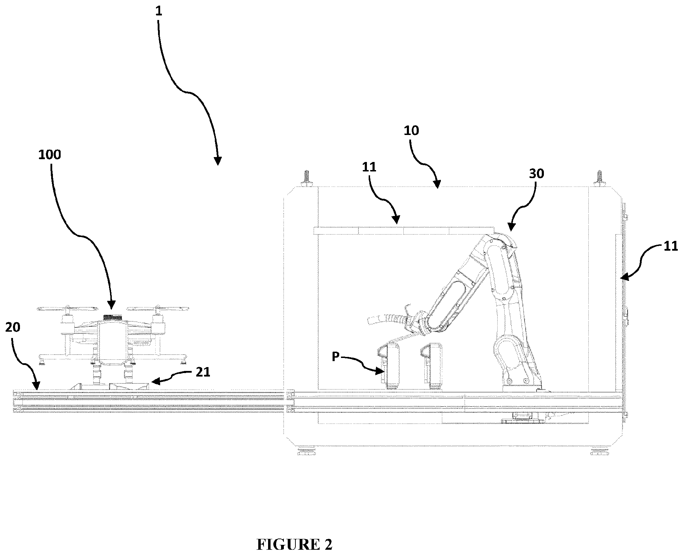

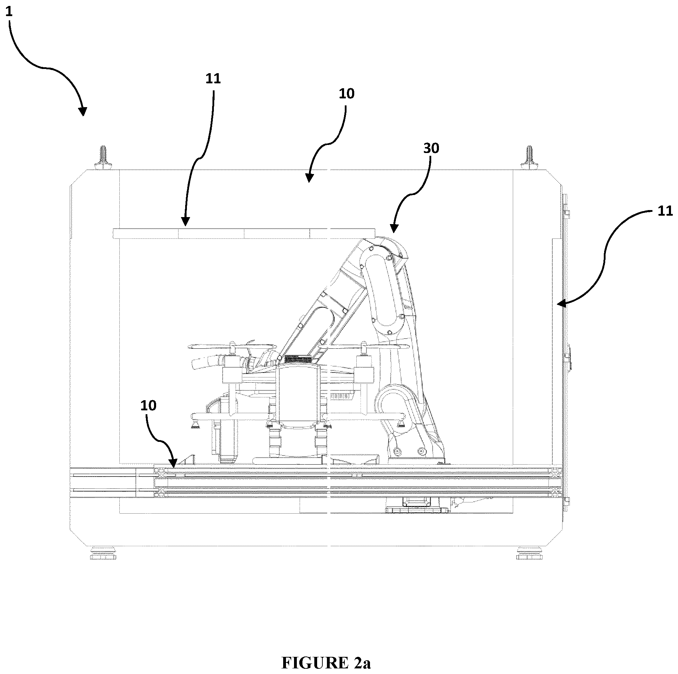

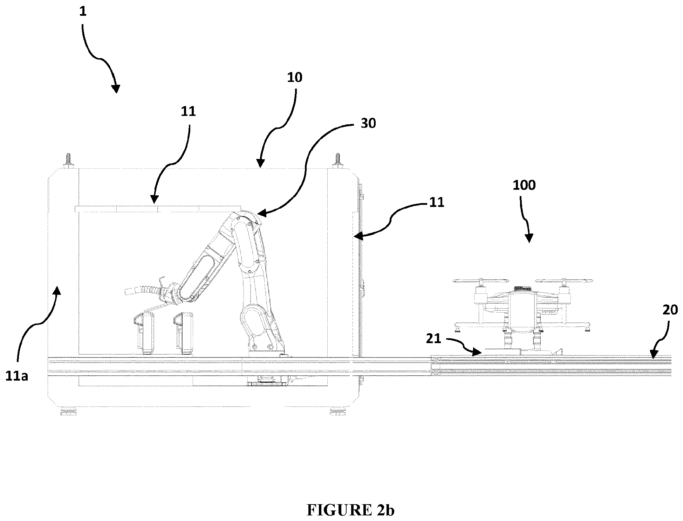

After the maintenance of the unmanned aerial vehicle (100) is completed, it is transported out of the housing (10) on the platform (20) as can be seen in Figure 2-2b.

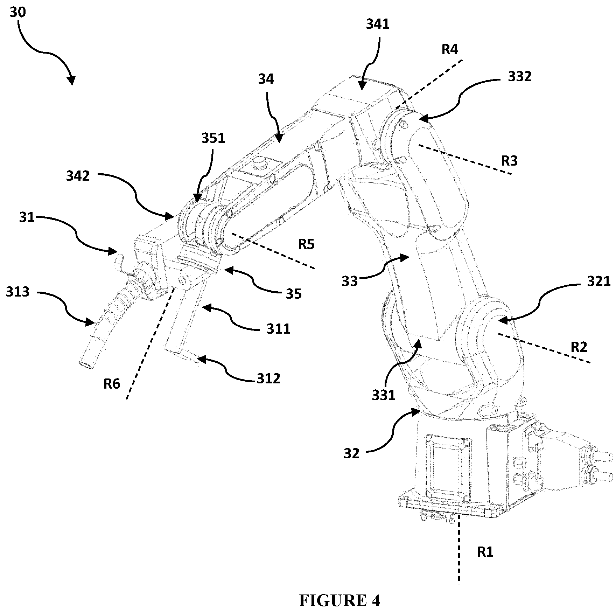

A maintenance area (13) is arranged in the housing (10). A robotic arm (30) is arranged in said maintenance area (13). Said robotic arm (30) comprises a maintenance arm (31). Said maintenance arm (31) comprises both a holder (311) and a filling tube (313) in Figure 4. Furthermore, embodiments comprising only the holder (311) or only the filling tube (313) can be used as required.

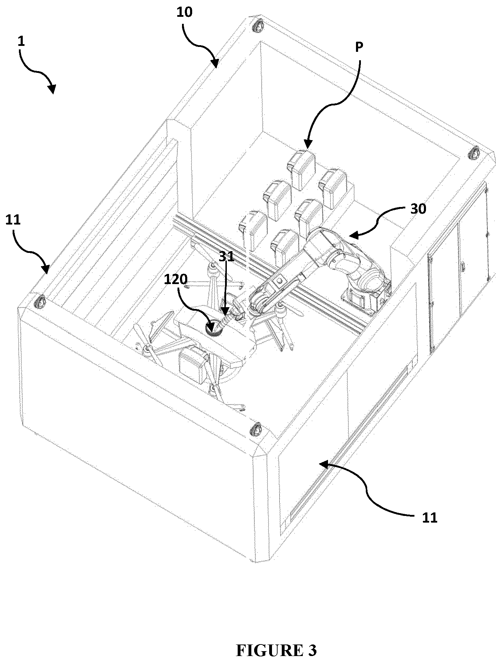

As can be seen in Figure 3, the robotic arm (30) moves from the maintenance area (13) towards the unmanned aerial vehicle (100) carried by the platform (20). During this movement, the robotic arm can remove the battery (P) of the unmanned aerial vehicle with the holder (311) and insert a new battery (P) back into the unmanned aerial vehicle (100).

In addition, the pesticide can be filled by moving the filling tube (313) onto the filling port (120) in the same motion. Here, the housing (10) may preferably contain at least one and preferably more than one pesticide tank (not shown in the figures). Here, several different types of pesticides can be filled by the robotic arm (30).

For both battery (P) and filling pesticide, the robotic arm (30) must position itself exactly correctly. To facilitate these operations performed by the robotic arm (30), the unmanned aerial vehicle (100) is moved to a predetermined point on the platform (20) after landing.

Referring to Figures 1b and 1c, this transport is performed by the adjustment elements (21). The adjustment elements (21) are provided on the said platform (20) and are configured to move together to a common point from different directions. During the movement to the common point, the adjustment elements contact the unmanned aerial vehicle (100) from different directions, thereby pushing the unmanned aerial vehicle (100) to said common point and fixing it thereon. In this way, the exact position of the unmanned aerial vehicle (100) on the platform (20) is known in advance.

Although the geometry of the adjustment element (21) can be provided in different ways, the surface in contact with the unmanned aerial vehicle is provided in a planar shape.

In a preferred embodiment, said adjustment elements (21) are provided on an adjustment shaft (211), and said adjustment shaft (211) is seated in an adjustment guide (22). Preferably, said adjustment guide (22) is provided in a planar shape.

The movement of the adjustment element (21) can be provided by the user, or a motor or piston-like drive element (not shown) can be used to drive the adjustment elements.

In addition, the adjustment elements (21) may also be connected to piston-like drive elements directed toward said common point.

A trigger sensor (not shown in the figures) can be used to prevent said drive elements from operating before the unmanned aerial vehicle (100) lands on the platform (20). Said trigger sensor detects the presence of the unmanned aerial vehicle (100) on the platform (20) and accordingly generates a trigger response. This trigger response triggers the drive element associated with the adjustment element (21), and the adjustment elements (21) accordingly push the unmanned aerial vehicle (100) towards said common point.

Said trigger sensor can be provided as a weight sensor. Said weight sensor is associated with the platform (20) and when the unmanned aerial vehicle (100) lands on the platform (20), the sensor generates a trigger response as the weight of the platform (20) increases.

Alternatively, a presence or proximity sensor can be used as a trigger sensor. Here, the sensor generates a trigger response when the presence of an unmanned aerial vehicle (100) is detected on the platform (20).

Another alternative is to use a camera as a trigger sensor. Here, an image processing unit is required to process the data received from the camera, and a trigger response is generated if the presence of the unmanned aerial vehicle (100) is detected in the processed image.

In another alternative, the unmanned aerial vehicle (100) communicates with the platform (20) via a communication module. This communication can take place before or during the unmanned aerial vehicle (100) lands on the platform. Here, the communication enables the adjustment elements (21) to move by performing the triggering process.

The trigger responses mentioned here can also be used to trigger the drive elements that move the platform.

Referring to Figure 4, it was previously mentioned that the robotic arm (30) comprises a maintenance arm (31). The maintenance arm (31) comprises a holder (311). The holder (311) comprises a holder end (312) provided at an angle, preferably 90°, relative to a longitudinal body. The holder end (312) functions as a hook to remove the battery (P) from the unmanned aerial vehicle (100) and to insert the new battery (P) from the maintenance area into the unmanned aerial vehicle.

The robotic arm (30) has preferably a six-axis. Accordingly, it comprises a first arm (32) rotating relative to a first axis (R1) perpendicular to the ground. At the end of said first arm (32) are oppositely arranged first ears (321). A second end (331) of a second arm (33) is disposed between said first ears (321), and the second arm (33) is rotatable relative to a second axis (R2) passing through the first ears (321). At the other end of the second arm (33) are the second ears (332). Between these second ears (332) is the third end (341) of the third arm (34) and the third arm (34) can rotate relative to the third axis (R3) passing through the second ears (332). The third arm (34) also rotates relative to a fourth axis (R4) passing through its center and perpendicular to the third axis (R3). At the other end of the third arm (34) are the third ears (342). Between said third ears (342), the fourth end (351) of the fourth arm (35) is located and the fourth arm (35) is rotatable relative to the fourth axis (R4) passing through the third ears (342). The fourth arm (35) also rotates relative to a fifth axis (R5) passing through its center and perpendicular to the fourth axis (R4).

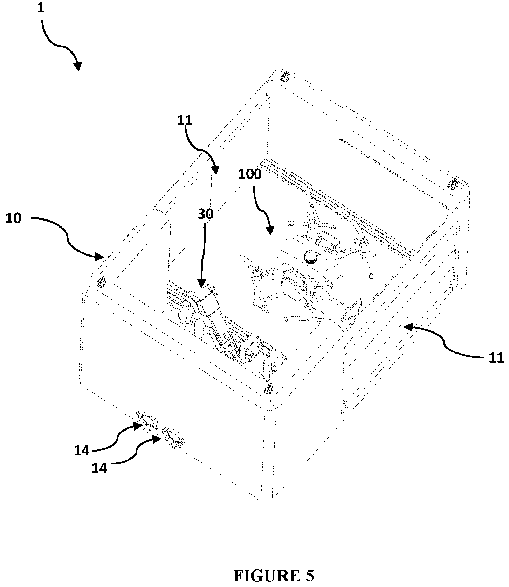

Referring to Figure 5, on the outer surface of said housing (10) there are secondary feeds (14). The secondary feed (14) is connected to the aforementioned pesticide store. If there is another unmanned aerial vehicle (100) in the housing (10), a second unmanned aerial vehicle (100) will be able to refill pesticides from there.

An embodiment of the invention further comprises the camera for controlling an agricultural spraying area, a processing unit for determining the type of plant, the type of pesticide and the area to be sprayed based on data it received from the said camera, and communication units for communication between the processing unit and the unmanned aerial vehicle (100).

## Claims

1. A maintenance station (1) for unmanned aerial vehicles (100) comprising:
a housing (10) of a completely closed geometry except having at least one opening (11a) for the entry and exit of the unmanned aerial vehicle (100) and a door for closing said opening (11a),
at least one platform (20) movable through the opening (11a) from the outside to the inside of said housing (10),
at least one robotic arm (30) positioned inside said housing (20) and comprising a maintenance arm (31) having a holder (311) for changing the battery (P) and a filling tube (313) for filling pesticide into an unmanned aerial vehicle's (100) filing port (120) to maintain the unmanned aerial vehicle (100), and
at least three adjustment elements (21) that can move toward a common point on the said platform (20) to adjust the position of the unmanned aerial vehicle (100).

2. The maintenance station (1) according to Claim 1, wherein said adjustment elements (21) are distributed at equal angular intervals.

3. The maintenance station (1) according to Claim 1, wherein said adjustment elements (21) are provided on the platform (20).

4. The maintenance station (1) according to Claim 1, further comprising a shaft (211) connected to said adjustment elements (21) and a longitudinal adjustment guide (22) in which said shaft (211) is movable.

5. The maintenance station (1) according to Claim 1, further comprising a drive element for driving said adjustment elements (21).

6. The maintenance station (1) according to Claim 5, further comprising a trigger sensor for triggering said drive elements.

7. The maintenance station (1) according to Clain 6 wherein said trigger sensor is a weight sensor or a presence or proximity or a camera associated with the platform.

8. The maintenance station (1) according to Claim 1, comprising at least two openings (11a).

9. The maintenance station (1) according to Claim 1, comprising at least two platforms (20).

10. The maintenance station (1) according to Claim 1, further comprising at least one secondary filling feed (14) for filling pesticide on an outer surface of the housing (10).

11. The maintenance station (1) according to Claim 1, further comprising a camera for controlling a pesticide spraying area, a processing unit for determining a type of plant, a type of pesticide and the area to be sprayed based on the data received from said camera, and communication units for communication between the processing unit and the unmanned aerial vehicle (100).

12. The maintenance station (1) according to Claim 1, wherein said robotic arm (30) is multi-axis.

13. The maintenance station (1) according to Claim 15, wherein said robotic arm (30) has a six-axis.

## Patentansprüche

1. Eine Wartungsstation (1) für unbemannte Luftfahrzeuge (100), umfassend:
ein Gehäuse (10) mit einer vollständig geschlossenen Geometrie, das jedoch mindestens eine Öffnung (11a) für den Ein- und Ausstieg eines unbemannten Luftfahrzeugs (100) sowie eine Klappe zum Verschließen dieser Öffnung (11a) aufweist,
mindestens eine Plattform (20), die durch die Öffnung (11a) von der Außenseite zum Inneren des Gehäuses (10) bewegbar ist,
mindestens einen Roboterarm (30), der innerhalb des Gehäuses (20) positioniert ist und einen Wartungsarm (31) mit einer Halterung (311) zum Wechseln der Batterie (P) und einem Füllrohr (313) zum Füllen von Pestizid in den Füllanschluss (120) eines unbemannten Luftfahrzeugs (100) zur Wartung des unbemannten Luftfahrzeugs (100) umfasst, und
mindestens drei Einstellelemente (21), die sich auf einen gemeinsamen Punkt auf der Plattform (20) zu bewegen können, um die Position des unbemannten Luftfahrzeugs (100) einzustellen.

2. Die Wartungsstation (1) nach Anspruch 1, wobei die Einstellelemente (21) in gleichen Winkelintervallen verteilt sind.

3. Die Wartungsstation (1) nach Anspruch 1, wobei die Einstellelemente (21) auf der Plattform (20) vorgesehen sind.

4. Die Wartungsstation (1) nach Anspruch 1, ferner umfassend eine Welle (211), die mit den Einstellelementen (21) verbunden ist, und eine Längseinstellführung (22), in der die Welle (211) beweglich ist.

5. Die Wartungsstation (1) nach Anspruch 1, die ferner ein Antriebselement zum Antreiben der genannten Einstellelemente (21) umfasst.

6. Die Wartungsstation (1) nach Anspruch 5, die ferner einen Auslösesensor zum Auslösen der genannten Antriebselemente umfasst.

7. Die Wartungsstation (1) nach Anspruch 6, wobei der Auslösesensor ein Gewichtssensor oder eine Anwesenheit oder Nähe oder eine der Plattform zugeordnete Kamera ist.

8. Die Wartungsstation (1) nach Anspruch 1, umfassend mindestens zwei Öffnungen (11a).

9. Die Wartungsstation (1) nach Anspruch 1, umfassend mindestens zwei Plattformen (20).

10. Die Wartungsstation (1) nach Anspruch 1, ferner umfassend mindestens eine sekundäre Befüllungszuführung (14) zum Befüllen einer Außenfläche des Gehäuses (10) mit Pestizid.

11. Die Wartungsstation (1) nach Anspruch 1, die ferner umfasst eine Kamera zum Steuern eines Pestizidsprühbereichs, eine Verarbeitungseinheit zur Bestimmung einer Pflanzenart, eine Art von Pestizid und den zu besprühendes Bereich auf Grundlage der von der Kamera empfangenen Daten und Kommunikationseinheiten zur Kommunikation zwischen der Verarbeitungseinheit und dem unbemannten Luftfahrzeug (100).

12. Die Wartungsstation (1) nach Anspruch 1, wobei der Roboterarm (30) mehrachsig ist.

13. Die Wartungsstation (1) nach Anspruch 15, wobei der Roboterarm (30) eine Sechs-Achse aufweist.

## Revendications

1. Station de maintenance (1) pour véhicules aériens sans pilote (100), comprenant :
• un boîtier (10) de géométrie entièrement fermée, à l'exception d'au moins une ouverture (11a) pour l'entrée et la sortie du véhicule aérien sans pilote (100) et d'une porte pour fermer ladite ouverture (11a),
• au moins une plate-forme (20) déplaçable à travers l'ouverture (11a) de l'extérieur vers l'intérieur dudit boîtier (10),
• au moins un bras robotique (30) positionné à l'intérieur dudit boîtier (20) et comprenant un bras de maintenance (31) ayant un support (311) pour changer la batterie (P) et un tube de remplissage (313) pour remplir le pesticide dans l'orifice de remplissage (120) d'un véhicule aérien sans pilote (100) afin d'assurer la maintenance du véhicule aérien sans pilote (100), et
• au moins trois éléments de réglage (21) qui peuvent se déplacer vers un point commun sur ladite plate-forme (20) afin de régler la position du véhicule aérien sans pilote (100).

2. Station de maintenance (1) selon la revendication 1, dans laquelle lesdits éléments de réglage (21) sont répartis à intervalles angulaires égaux.

3. Station de maintenance (1) selon la revendication 1, dans laquelle lesdits éléments de réglage (21) sont disposés sur la plate-forme (20).

4. Station de maintenance (1) selon la revendication 1, comprenant en outre un arbre (211) relié auxdits éléments de réglage (21) et un guide de réglage longitudinal (22) dans lequel ledit arbre (211) peut se déplacer.

5. Station de maintenance (1) selon la revendication 1, comprenant en outre un élément d'entraînement pour entraîner lesdits éléments de réglage (21).

6. Station de maintenance (1) selon la revendication 5, comprenant en outre un capteur de déclenchement pour déclencher lesdits éléments d'entraînement.

7. Station de maintenance (1) selon la revendication 6, dans laquelle ledit capteur de déclenchement est un capteur de poids, de présence ou de proximité, ou une caméra associée à la plate-forme.

8. Station de maintenance (1) selon la revendication 1, comprenant au moins deux ouvertures (11a).

9. Station de maintenance (1) selon la revendication 1, comprenant au moins deux plates-formes (20).

10. Station de maintenance (1) selon la revendication 1, comprenant en outre au moins une alimentation secondaire (14) pour remplir le pesticide sur une surface extérieure du boîtier (10).

11. Station de maintenance (1) selon la revendication 1, comprenant en outre une caméra pour contrôler une zone de pulvérisation de pesticides, une unité de traitement pour déterminer un type de plante, un type de pesticide et la zone à pulvériser sur la base des données reçues de ladite caméra, et des unités de communication pour la communication entre l'unité de traitement et le véhicule aérien sans pilote (100).

12. Station de maintenance (1) selon la revendication 1, dans laquelle ledit bras robotique (30) est multiaxial.

13. Station de maintenance (1) selon la revendication 15, dans laquelle ledit bras robotique (30) présente six axes.
